Europäisches Patentamt

European Patent Office

Office européen des brevets

(11) Veröffentlichungsnummer: **0 483 402 A1**

# EUROPÄISCHE PATENTANMELDUNG

(21) Anmeldenummer: **90120877.7**

(22) Anmeldetag: **31.10.90**

(51) Int. Cl.5: **G01B 13/10**

(43) Veröffentlichungstag der Anmeldung:
**06.05.92 Patentblatt 92/19**

(84) Benannte Vertragsstaaten:
**DE DK ES FR GB IT SE**

(71) Anmelder: **Maschinenfabrik Gehring GmbH & Co.**
**Gehringstrasse 28**
**W-7302 Ostfildern 2(DE)**

(72) Erfinder: **Fröschle, Bernhard**
**Ernst-Kirchner-Strasse 1**
**W-7302 Ostfildern 2(DE)**
Erfinder: **Tretter, Werner**
**Fabrikstrasse 11**
**W-7066 Baltmannsweiler 2(DE)**

(74) Vertreter: **Jackisch, Walter, Dipl.-Ing. et al**
**Patentanwalt W. Jackisch & Partner**
**Menzelstrasse 40**
**W-7000 Stuttgart 1(DE)**

(54) Verfahren und Vorrichtung zum Messen der Geometrie von Bohrungen.

(57) Das Verfahren zum Messen der Geometrie von Bohrungen umfaßt die Eichung eines Meßdornes (4), der mehrere - beispielsweise drei - Düsenpaare (1, 2 und 3) als pneumatische Meßstellen aufweist. Zum Vermessen der Bohrung (5) wird der Meßdorn (4) in die Bohrung eingefahren, und es werden gleichzeitig in mehreren Meßebenen (E1, E2 und E3) pneumatische Meßwerte ermittelt, die in elektrische Signale umgewandelt werden. Für die Eichung des Meßdornes (4) werden die Meßstellen (1, 2 und 3) einzeln innerhalb einer Eicheinrichtung geprüft, die bevorzugt aus zwei Eichringen (7 und 8) unterschiedlichen Durchmessers besteht. Dabei werden pro Meßstelle zwei Werte ermittelt, die auf die Absolutwerte der Eichringe (7 und 8) in einer elektronischen Auswerteeinheit (12) bezogen werden. Aus rechnerisch ermittelten Kennlinien ergeben sich Korrekturwerte für die Vermessung der Bohrung (5). Ein in der Auswerteeinrichtung (12) vorhandener Rechner ermittelt danach die genauen Maße der Bohrung (5) während der Messung.

Rank Xerox (UK) Business Services
(−/2.18/2.1)

Die Erfindung betrifft ein Verfahren zum Messen der Geometrie von Bohrungen nach dem Oberbegriff des Patentanspruches 1 und eine Vorrichtung zur Durchführung des Verfahrens.

Zur Messung des Durchmessers von Bohrungen sind pneumatische Meßdorne bekannt. Bei ihnen wird Luft durch zwei diametral angeordnete Düsen ausgeblasen, welche eine Meßstelle bilden. Der Strömungswiderstand ist von dem Abstand zwischen Düse und Bohrungswand abhängig und kann daher mittels einer Differenzmessung zur Bestimmung des Durchmessers der Bohrung ausgewertet werden. Der Meßdorn ist an einen pneumatischelektrischen Wandler angeschlossen, der das pneumatische Meßsignal in ein elektrisches Ausgangssignal umwandelt.

Pneumatische Meßanordnungen dieser Art werden in der Fertigung verwendet, um vor, während oder nach einem Bearbeitungsgang, beispielsweise einer Honbearbeitung, festzustellen, ob die Bohrung innerhalb der geforderten Abmessung liegt. Die Meßergebnisse können dazu ausgewertet werden, den Bearbeitungsgang so zu steuern, daß ein vorbestimmtes Ergebnis erreicht wird. Ein bedeutsames Anwendungsgebiet für diese Meßsteuerung ist die automatische Hubkorrektur der Honspindel an Honmaschinen, um Geometriefehler an inbesondere zylindrischen Bohrungen zu vermeiden. Bei diesem Verfahren ist es bekannt, die Meßanordnung mittels eines Eichringes zu eichen und anschließend die Bohrung in mehreren, beispielsweise in drei Ebenen zu vermessen und über eine Auswerte- und Rechenelektronik Korrekturwerte zu bilden, welche in die Steuerung des Bearbeitungsganges einbezogen werden.

Nachteilig ist der hohe Zeitaufwend für das aufeinanderfolgende Messen in mehreren Ebenen. Es ist darum auch schon vorgeschlagen worden, einen Meßdorn mit mehreren Paaren von pneumatischen Meßdüsen auszustatten, die in bezug auf die Bohrung in axialem Abstand angeordnet sind und das gleichzeitige Messen in mehreren Meßebenen ermöglichen, wobei jedes Düsenpaar mit einem eigenen Meßwandler verbunden ist. Dabei ergibt sich aber eine ungenügende Meßgenauigkeit, denn aus fertigungstechnischen Gründen können weder mehrere völlig gleiche Düsenpaare noch genau gleiche Meßwandler hergestellt werden. Auch ist es nicht möglich, Eichringe zu fertigen, die über eine größere Länge die entsprechende Maßhaltigkeit erfüllen, um alle Düsenpaare gleichzeitig abzugleichen.

Der Erfindung liegt die Aufgabe zugrunde, das Verfahren der eingangs genannten Art so weiterzubilden, daß eine sehr schnelle und hochgenaue Messung von Bohrungen in mehreren Meßebenen möglich ist. Auch soll ein schneller Austausch von im Durchmesser unterschiedlichen Meßdornen ermöglicht werden. Weiterhin soll die Vorrichtung zur Durchführung des Verfahrens einfach aufgebaut und leicht zu bedienen sein.

Die Aufgabe wird erfindungsgemäß durch die kennzeichnenden Merkmale des Anspruches 1 gelöst. Weitere Merkmale des Verfahrens und die wesentlichen Merkmale der Vorrichtung ergeben sich aus den übrigen Ansprüchen und der Beschreibung in Verbindung mit den Zeichnungen.

Besonders zweckmäßig ist die aufeinanderfolgende Prüfung der Meßstellen, die als Düsenpaare des Mehrfach-Meßdorens ausgeführt sein können, mittels zweier geeichter unterschiedlicher Bohrungsdurchmesser. Dabei kann für jedes Düsenpaar mit zugeordnetem Meßwandler eine spezifische Kennlinie errechnet werden. Diese Kennlinien ermöglichen durch ihren Bezug auf den Absolutwert der Eicheinrichtung eine Korrektur der Meßstellen-Meßwerte nach jeder Messung. Dadurch ist es möglich, mit unabhängigen Meßsystemen den Durchmesser einer Bohrung in mehreren Meßebenen in einem einzigen Meßvorgang mit sehr hoher Genauigkeit zu ermitteln. Darüberhinaus ermöglicht es die Erfindung, Meßdorne ohne manuelle Eingabe von Korrekturwerten etc. direkt auszutauschen, was insbesondere für Maschinen mit automatischem Werkzeugwechsel von großem Vorteil ist.

Die Erfindung wird im folgenden anhand eines Ausführungsbeispieles näher erläutert. Es zeigen

Fig. 1    eine Meßanordnung für eine zylindrische Bohrung in schematischer Darstellung,

Fig. 2    zur Erläuterung des erfindungsgemäßen Verfahrens eine graphische Darstellung der zur Ermittlung von Korrekturwerten gebildeten Kennlinien.

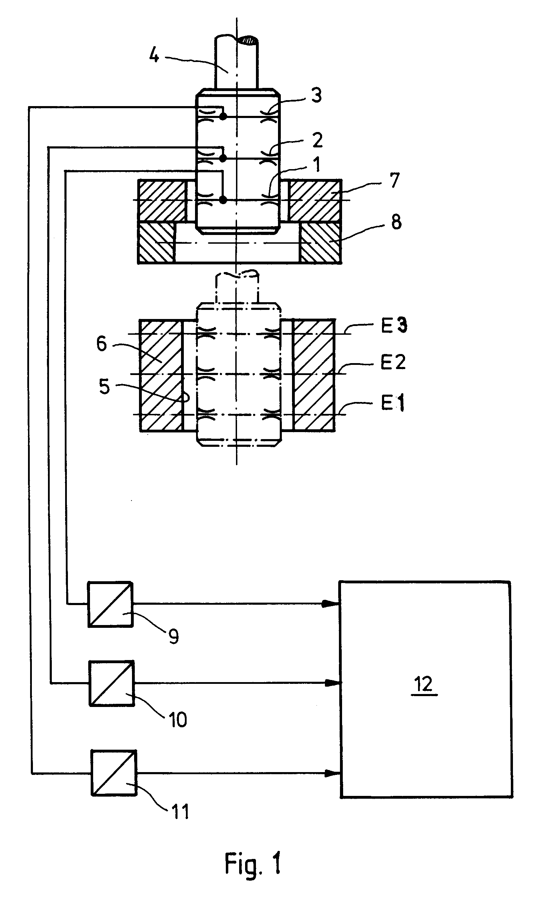

Fig. 1 zeigt einen Mehrfach-Meßdorn 4 mit drei als Düsenpaare ausgeführten Meßstellen 1, 2 und 3, die in axialem Abstand voneinander angeordnet sind, um den Durchmesser einer Bohrung 5 eines Werkstückes 6 in drei Meßebenen E1, E2 und E3 gleichzeitig zu ermitteln. Oberhalb des Werkstückes 6 sind axial übereinander zwei Eichringe 7 und 8 angeordnet, die unterschiedliche Durchmesser haben, wie der Deutlichkeit halber stark übertrieben dargestellt ist. Die beiden Eichringe können auch als einstückige Einheit ausgeführt sein. Die Meßstellen sind in bekannter Weise an je einen pneumatisch-elektrischen Meßwandler 9, 10 bzw. 11 angeschlossen, welcher den pneumatischen Meßwert in ein entsprechendes elektrisches Ausgangssignal umwandelt. Dadurch ergeben sich drei unabhängige Meßsysteme. Die Ausgangssignale der Meßwandler 9, 10 und 11 werden einer gemeinsamen Rechen- und Auswerteeinheit 12 zugeführt und dort ausgewertet.

Der Meßablauf gliedert sich in die Bereiche Justierung und Messen. Die Justierung ist dem Meßvorgang vorgeschaltet, wobei vorteilhafterweise nach jedem Meßdornwechsel und nach einer bestimmten, vorgebbaren Anzahl von Meßvorgängen oder nach einer vorgebbaren Zeit erneut justiert wird. Zum Justieren wird die Meßstelle 1 über eine (nicht gezeigte) Positioniersteuerung in den Eichring 7 eingefahren, der das Maß Dmin hat. Dann wird die Meßluft eingeschaltet. Über den Meßwandler 9 wird der Meßwert D1min der Auswerteeinheit 12 zugeführt und dort abgespeichert. Danach wird die Meßstelle 1 in den Eichring 8 mit dem Maß Dmax eingefahren und die Meßluft eingeschaltet. Über den Meßwandler 9 wird der Meßwert D1max der Auswerteeinheit 12 zugeführt und dort abgespeichert.

Für die Meßstelle 2 mit angeschlossenem Wandler 10 und die Meßstelle 3 mit angeschlossenem Wandler 11 wird in gleicher Weise verfahren. Damit ist für jede Meßstelle ein Wert Dmin und ein Wert Dmax gespeichert. Da die Absolutmaße der Eichringe 7 und 8 bekannt sind, kann jetzt über ein Rechenprogramm der Auswerteeinheit 12 für jede Meßstelle einschließlich Meßwandler die Kennlinie errechnet werden.

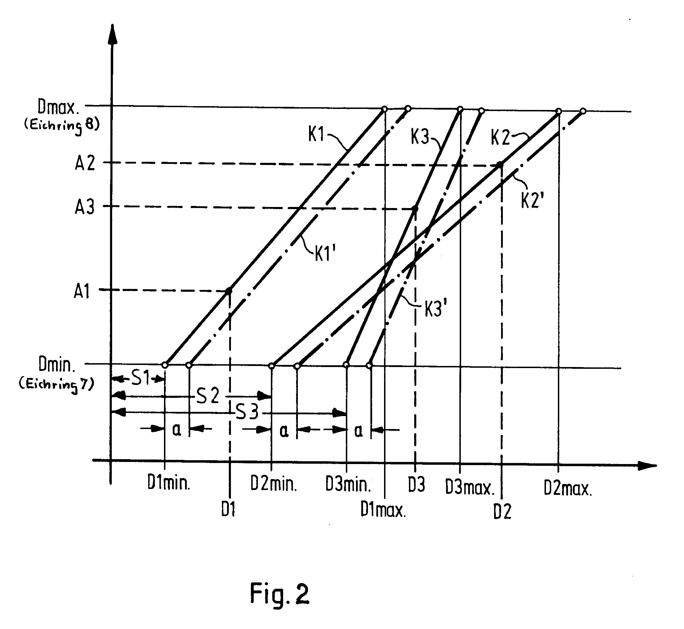

Wie aus Fig. 2 ersichtlich ist, ergeben sich drei Kennlinien K1, K2 und K3 unterschiedlicher Steigung. Die Kennlinie für die Meßstelle 1 ist definiert als:

$$K1 = \frac{Dmax - Dmin}{D1max - D1min}$$

Für die Meßstellen 2 und 3 werden die Steigungen analog errechnet.

In der graphischen Darstellung nach Fig. 2 sind auf der Ordinate die Absolutmaße Dmin und Dmax der Eichringe 7 und 8 aufgetragen, und über der Abszisse die jeweilig zugehörigen Meßwerte D1min, D1max der Meßstelle 1, D2min, D2max der Meßstelle 2 und D3min, D3max der Meßstelle 3. Da die Meßwandler 9, 10 und 11 im linearen Meßbereich betrieben werden, ergeben sich die Kennlinien K1, K2 und K3 aus der geradlinigen Verbindung der Schnittpunkte der jeweiligen Meßwerte mit den Absolutwerten der Eichringe 7 und 8.

Wie im Beispiel dargestellt, haben die Kennlinien K1, K2 und K3 der unabhängigen Meßsysteme mit den Meßstellen 1, 2 und 3 aufgrund der Fertigungstoleranzen unterschiedliche Steigung und Lage. Die für eine genaue Messung zulässigen Toleranzen der Steigungswinkel sind in der Auswerteeinheit 12 fest gespeichert, so daß eine zusätzliche Kontrollfunktion gegeben ist, z.B. auf Wandlerfehler oder Verschleiß des Meßwerkzeuges.

Die Kennlineien K1, K2 und K3 ermöglichen es, für jeden in den Ebenen E1, E2 und E3 ermittelten Meßwert den richtigen Absolutwert zu bestimmen. Wird beispielsweise in der Ebene E1 ein Wert D1 gemessen, so kann - wie in Fig. 2 strichliert dargestellt - anhand der Kennlinie K1 der zugehörige Wert A1 festgestellt werden, der mit dem genauen Absolutwert des Bohrungsdurchmessers in der Ebene E1 übereinstimmt. Entsprechend kann zu einem Meßwert D2 über die Kennlinie K2 der Absolutwert A2 und zu einem Meßwert D3 über die Kennlinie K3 der Absolutwert A3 entnommen werden. Dadurch ist auch der maßliche Zusammenhang der an sich unabhängigen Meßsysteme gegeben.

Dieser anhand des Diagrammes (Fig. 2) erläuterte Vorgang wird in der Auswerteeinheit 12 rechnerisch ausgeführt. Dazu werden die Kennlinien K1, K2 und K3 auf den Absolutwert Dmin des Eichringes 7 bezogen und die Werte S1, S2 und S3 zu Dmin jeweils in einem Kompensationsspeicher abgelegt. Diese Werte werden zusammen mit den gespeicherten Werten für die Steigung der Kennlinien K1, K2 und K3 zur entsprechenden Umrechnung der Meßwerte herangezogen. Dadurch wird mit an sich unabhängigen Meßsystemen an einem Werkstück eine sehr genaue Geometrie- und Durchmesserermittlung ermöglicht.

Um den Zeitaufwand für die Messung gering zu halten, wird die Justierung, wie bereits erwähnt, nur in den erforderlichen Abständen bzw. nach einem Meßwerkzeugwechsel vorgenommen. Zur Minimierung von Meßungenauigkeiten ist es jedoch vorteilhaft, wenn vor jeder Bohrungsmessung eine vereinfachte sogenannte Driftkompensation ausgeführt wird. Dabei wird davon ausgegangen, daß sich Abweichungen von den zunächst in den Eichringen gemessenen Werten in einer Richtung ergeben, was als Drift bezeichnet wird. Bei der vereinfachten Driftkompensation wird aufgrund von Erfahrungswerten angenommen, daß die Drift bei bei allen drei Meßstellen gleiche Größe und Richtung hat.

Für diese Kompensation wird über die Positioniersteuerung eine Meßstelle, z.B. die Meßstelle 2, in den Eichring 7 eingefahren, der das Maß Dmin hat. Nach Eingabe des Startsignals "Messen" über eine (nicht gezeigte) Steuerung wird die Meßluft eingeschaltet. Der Meßwert wird über den Meßwandler 10 der Auswerteeinheit 12 zugeführt und dort als neuer D2min-Wert gespeichert. Die Auswerteeinheit 12 vergleicht diesen neuen Wert D2min mit dem vorherigen Speicherwert D2min und addiert die Differenz zu den Meßwertspeichern D1min und D3min.

Auf diese einfache Weise werden die Meßsysteme mit den Meßstellen 1 und 3 der Drift des Meßsystemes mit der Meßstelle 2 angepaßt.

Diesen Vorgang veranschaulicht das Diagramm (Fig. 2) ebenfalls. Die Kennlinien K1, K2 und K3 werden durch die Drift beispielsweise um den gleichen Betrag "a" nach rechts verschoben, es gelten also nach der Kompensation die neuen strichpunktierten Kennlinien K1', K2' und K3'.

Es ist jedoch auch möglich, unterschiedliche Driftrichtungen und Driftstärken durch entsprechende Eingaben in die Auswerteinheit 12 zu berücksichtigen, so daß sich dann die Kennlinien um verschiedene Beträge und ggf. in unterschiedlicher Richtung verschieben.

Nach der Justierung und ggf. nach Driftkompensation wird der Meßdorn 4 über die Positionierungsteuerung in die Werkstückmeßposition gefahren, die in Fig. 1 strichpunktiert angegeben ist. Dann wird die Meßluft für alle drei Meßsysteme eingeschaltet. Die Bohrung des Werkstückes wird danach gleichzeitig in drei Ebenen vermessen und die Meßwerte der Auswerteeinheit 12 zugeführt. Die Auswerteeinheit errechnet nun das genaue Meßergebnis anhand der bei der Justierung ermittelten Kennlinien der Meßsysteme sowie ggf. unter Berücksichtigung der Driftkompensation. Damit ist es möglich, mit an sich unabhängigen Meßsystemen sehr schnell in einem Meßvorgang eine Bohrung in mehreren Ebenen mit sehr hoher Genauigkeit zu vermessen.

Nach dem Messen wird der Meßdorn zurück in die Abgleichposition gefahren, so daß die Meßstelle 2 wieder im Eichring 7 steht, und ein neuer Meßvorgang kann gestartet werden.

**Patentansprüche**

1. Verfahren zum Messen der Geometrie von Bohrungen mittels einer pneumatischen Meßanordnung mit einem in die Bohrung einfahrbaren Meßdorn (4), der mehrere axial hintereinander liegende Meßstellen (1, 2 und 3) zum gleichzeitigen Messen des Bohrungsdurchmessers in mehreren Meßebenen (E1, E2 und E3) aufweist, wobei die pneumatischen Meßwerte mittels mindestens eines Wandlers (9, 10 und 11) in elektrische Signale umgewandelt werden, die einer elektronischen Auswerteeinheit (12) zugeführt werden, und mit einer Eicheinrichtung (7, 8) zum elektrischen Justieren der Meßstellen (1, 2 und 3) des Meßdornes (4), dadurch gekennzeichnet, daß die Meßstellen (1, 2 und 3) des Meßdornes (4) in der Eicheinrichtung (7, 8) jeweils an mindestens einem ihnen zugeordneten, geeichten Bohrungsdurchmesser geprüft werden, wobei die dabei gemessenen Werte über den zugehörigen Wandler (9, 10, 11) der elektronischen Auswerteeinheit (12) zugeführt werden, und daß Abweichungen des jeweils gemessenen Wertes von dem Wert des geeichten Bohrungsdurchmessers in der elektronischen Auswerteeinheit (12) bei der Geometriemessung der Bohrung als Korrekturwerte verarbeitet werden.

2. Verfahren nach Anspruch 1, dadurch gekennzeichnet, daß jede Meßstelle (1, 2 und 3) des Meßdornes (4) mittels zweier geeichter Bohrungsdurchmesser (Dmin und Dmax) geprüft wird, deren Werte unterhalb bzw. oberhalb des zu messenden Bohrungsdurchmessers liegen.

3. Verfahren nach Anspruch 2, dadurch gekennzeichnet, daß pro Meßstelle (1; 2; 3) aus den beiden geeichten Bohrungsdurchmessern (Dmin und Dmax) und den beiden durch die Prüfung ermittelten Meßwerten (D1min und D1max; D2min und D2max; D3min und D3max) eine Kennlinie (K1; K2; K3) gebildet wird, mittels der der absolute Wert des Bohrungsdurchmessers anhand des Meßwertes zu ermitteln ist.

4. Verfahren nach Anspruch 3, dadurch gekennzeichnet, daß die Kennlinien (K1; K2; K3) in der Auswerteeinheit (12) rechnerisch ermittelt werden.

5. Verfahren nach Anspruch 4, dadurch gekennzeichnet, daß in der Auswerteeinheit (12) die Kennlinien (K1; K2; K3) nach dem Wert ihrer Steigung und/oder nach den Differenzwerten zu den geeicheten Bohrungsdurchmessern gespeichert werden.

6. Verfahren nach einem der Ansprüche 1 bis 5, dadurch gekennzeichnet, daß die Justierung der Meßstellen (1, 2 und 3) des Meßdornes (4) nach einer vorgegebenen Anzahl von Messungen oder einem vorgegebenen Zeittakt wiederholt wird.

7. Verfahren nach einem der Ansprüche 1 bis 6, dadurch gekennzeichnet, daß in Abhängigkeit von der Anzahl der Messungen der Bohrung, vorzugsweise vor jedem Meßvorgang, Abweichungen von der Justierung kompensiert werden.

8. Verfahren nach Anspruch 7, dadurch gekennzeichnet, daß Abweichungen von der Justierung durch Messung in der Eicheinrichtung (7) und Vergleich des Meßwertes mit dem entsprechenden in der Auswerteeinrichtung (12) gespeicherten Wert ermittelt werden, wobei vorzugsweise nur eine der Meßstellen (1; 2; 3) geprüft und anhand dieses Meßwertes die Abweichungen der übrigen Meßstellen rechnerisch ermittelt und ebenfalls kompensiert werden.

9. Vorrichtung zur Durchführung des Verfahrens nach einem der Ansprüche 1 bis 8, dadurch gekennzeichnet, daß die Eicheinrichtung mindestens einen zur Bohrungsachse koaxialen Eichring (7; 8) aufweist, und daß der Meßdorn (4) zum aufeinanderfolgenden Justieren der vorzugsweise als Düsenpaare ausgeführten Meßstellen (1, 2 und 3) in mehreren Lagen innerhalb des Eichringes (7; 8) zu positionieren ist.

10. Vorrichtung, insbesondere nach Anspruch 9, zur Durchführung des Verfahrens nach einem der Ansprüche 2 bis 8, dadurch gekennzeichnet, daß die Eicheinrichtung zwei axial hintereinander angeordnete Eichringe (7 und 8) aufweist, und daß der eine Eichring (7) das Maß des minimalen Bohrungsdurchmessers (Dmin) und der andere Eichring (8) das Maß des maximalen Bohrungsdurchmessers (Dmax) hat.

11. Vorrichtung nach Anspruch 9 oder 10, dadurch gekennzeichnet, daß jeder Meßstelle (1, 2 und 3) ein pneumatisch-elektrischer Wandler (9; 10; 11) zugeordnet ist, und daß die elektrische Auswerteeinheit (12) je einen Eingang für die Wandler (9, 10 und 11) aufweist sowie ein Rechenprogramm enthält.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 524 631 (MECALIX-fr) <br> * Einführung; Figuren 1-3; Seite 4, Zeile 15 - Seite 7, Zeile 25 * <br> --- | 1,9-11 | G 01 B 13/10 |
| A | US-A-3 065 628 (W.F. GESELL) <br> * Einführung; Figuren 1,3,4; Spalte 2, Zeile 28 - Spalte 3, Zeile 32; Spalte 5, Zeile 48 - Spalte 6, Zeile 40 * <br> --- | 1,2,9 | |
| A | US-A-2 779 188 (F. MEYER Jr.) <br> * Figuren 1,4-7; Gesamtes Druckschrift * <br> ----- | 1 | |

RECHERCHIERTE SACHGEBIETE (Int. Cl.5)

G 01 B

Der vorliegende Recherchenbericht wurde für alle Patentansprüche erstellt

| Recherchenort | Abschlußdatum der Recherche | Prüfer |
|---|---|---|
| DEN HAAG | 18-07-1991 | VISSER F.P.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)